# FASCICULE DE BREVET EUROPEEN

(11) **EP 0 576 073 B1**
(45) Date de publication et mention de la délivrance du brevet: **05.11.1997**
(21) Numéro de dépôt: 93201728.8
(22) Date de dépôt: 16.06.1993
(51) Int. Cl.: H04N 5/76

(54) **Dispositif de connexion entre un téléviseur et un appareil périphérique**
Verbindungsvorrichtung zwischen einem Fernsehgerät und einem peripheren Gerät
Connection device between a television receiver and a peripheral device

(30) Priorité: 24.06.1992 FR 9207737
(43) Date de publication de la demande: 29.12.1993
(73) Titulaire: PHILIPS ELECTRONIQUE GRAND PUBLIC, 92150 Suresnes (FR); Philips Electronics N.V., 5621 BA Eindhoven (NL)
(72) Inventeur: Debaecke, Jean Léon, Société Civile S.P.I.D., F-75008 Paris (FR); Heuvelman, Maarten, Société Civile S.P.I.D., F-75008 Paris (FR)
(74) Mandataire: Caron, Jean

(56) Documents cités:
- EP-A- 0 186 468
- EP-A- 0 400 745
- EP-A- 0 487 092

## Description

La présente invention concerne un dispositif comprenant un démodulateur vidéo et des moyens de présentation d'images, le démodulateur étant susceptible de fournir des signaux représentant des images soit d'un premier format, soit d'un second format, et les moyens de présentation d'images étant capables de présenter des images des deux formats, dispositif susceptible d'être relié à un appareil périphérique d'enregistrement et de reproduction d'images capable d'exploiter et de fournir des signaux représentant des images de chacun des deux formats, la liaison entre le dispositif et l'appareil périphérique se faisant via un connecteur multibroches sur une broche duquel l'appareil périphérique applique, lorsqu'il délivre des signaux au dispositif, une tension déterminée destinée à informer les moyens de présentation d'images que des signaux vidéo sont fournis par l'appareil périphérique, le dispositif étant également muni de moyens pour appliquer sur la même broche une tension indiquant à quel format d'image correspondent les signaux qui sont fournis par le démodulateur.

Un tel dispositif est un système de réception de télévision, le plus souvent il s'agira d'un téléviseur grand-public, et l'invention s'applique plus particulièrement dans le cas des standards D2-MAC ou HD-MAC, avec lesquels des images de formats 4:3 ("premier format") et aussi de format 16:9 ("second format") sont susceptibles d'être utilisées. Il est nécessaire dans le cas de l'enregistrement par un appareil périphérique, par exemple un magnétoscope, que ce dernier soit informé au sujet du format des images à enregistrer, et réciproquement, il doit pouvoir informer le téléviseur au sujet du format des images qu'il lui fournit.

Un connecteur dit "de péritélévision" ou "SCART" a été normalisé par la norme française NFC 92-250 de décembre 1978, puis ensuite à l'échelon mondial par la norme IEC 933, pour permettre la liaison d'un téléviseur avec un appareil périphérique. Selon une modification future de la norme, qui a été proposée récemment, on utilise la broche huit du connecteur pour transmettre des informations concernant le format. Il est souhaitable de pouvoir continuer à utiliser ce connecteur avec les nouveaux standards de transmission en le modifiant de façon telle qu'il soit possible d'utiliser un seul connecteur pour la liaison avec un appareil périphérique.

Un dispositif développé dans ce but, et conforme au préambule ci-dessus est connu par le document EP-A-0 400 745. Selon ce document, on prévoit d'appliquer sur la dite broche quatre tensions différentes selon les situations. Quant à la future norme, elle prévoit d'appliquer entre 0 et 2 volts si le téléviseur reçoit une émission à partir de son connecteur d'antenne (et éventuellement le magnétoscope enregistre cette émission), entre 9,5 et 12 volts s'il reçoit des images en format 4:3 à partir du magnétoscope, et entre 4,5 et 7 volts s'il reçoit des images en format 16:9 à partir du magnétoscope.

Néanmoins il risque d'y avoir conflit si le magnétoscope est en position de lecture et applique une tension sur la dite broche et qu'en même temps le téléviseur applique sa propre tension pour indiquer le format de l'émission décodée par son démodulateur. Ce conflit peut être résolu en adaptant les impédances des sources de tension correspondantes dans les appareils nouveaux, mais il y a toujours risque de mauvais fonctionnement en cas d'association d'appareils nouveaux avec des appareils anciens.

L'invention résout le problème du fait que le dispositif applique la dite tension seulement dans le cas où le démodulateur fournit des signaux représentant des images du second format, et du fait qu'il cesse en outre pendant un temps déterminé, à intervalles réguliers, de fournir la dite tension, afin de recevoir la tension fournie sur la broche par l'appareil périphérique.

Avantageusement, le temps pendant lequel le dispositif cesse d'appliquer la dite tension est plus court que le temps pendant lequel il applique la dite tension, dans un rapport d'au moins dix, et la cessation de l'application de la dite tension a lieu par exemple pendant un intervalle de temps entre deux images ou, dans le cas d'une image entrelacée, entre deux demi-images.

Ceci a l'avantage que lorsque l'interruption de la tension est suffisamment brève, le fonctionnement de l'appareil périphérique risque moins d'en être affecté lorsqu'il est en mode récepteur.

Dans une forme de réalisation particulière, le dispositif est muni de moyens pour supprimer l'application ultérieure d'une tension sur la broche dans le cas où, pendant le temps où il cesse de fournir une tension sur la broche, une tension en provenance d'un appareil périphérique y est présente.

Dans une forme de réalisation particulière, des moyens pour appliquer la dite tension pendant un temps déterminé comprennent un commutateur qui relie la broche, soit à une source de tension qui fournit la dite tension, soit à un moyen de commande des fonctions du dispositif.

Avantageusement, le dit commutateur est actionné par une base de temps qui, lorsqu'une tension est détectée sur la broche pendant le temps où cette broche est reliée au dit moyen de commande des fonctions du dispositif, reste bloquée dans l'état qui place le commutateur dans la position reliant la broche à un moyen de commande des fonctions du dispositif. A cet effet une entrée de commande de blocage de la base de temps est prévue et est reliée à une connexion reliant le commutateur au dit moyen de commande des fonctions du dispositif.

Dans une variante de réalisation, un moyen de commande des fonctions du dispositif comporte un microprocesseur, et la fonction de base de temps est réalisée par ce même microprocesseur.

Ces aspects de l'invention ainsi que d'autres aspects plus détaillés apparaîtront plus clairement grâce à la description suivante d'un mode de réalisation non limitatif.

La figure 1 représente très schématiquement un exemple d'un dispositif selon l'invention avec un appareil périphérique associé.

La figure 2 représente un diagramme des tensions appliquées à la broche au cours du temps.

La figure 3 est un schéma d'un mode de réalisation de l'invention à l'intérieur d'un téléviseur.

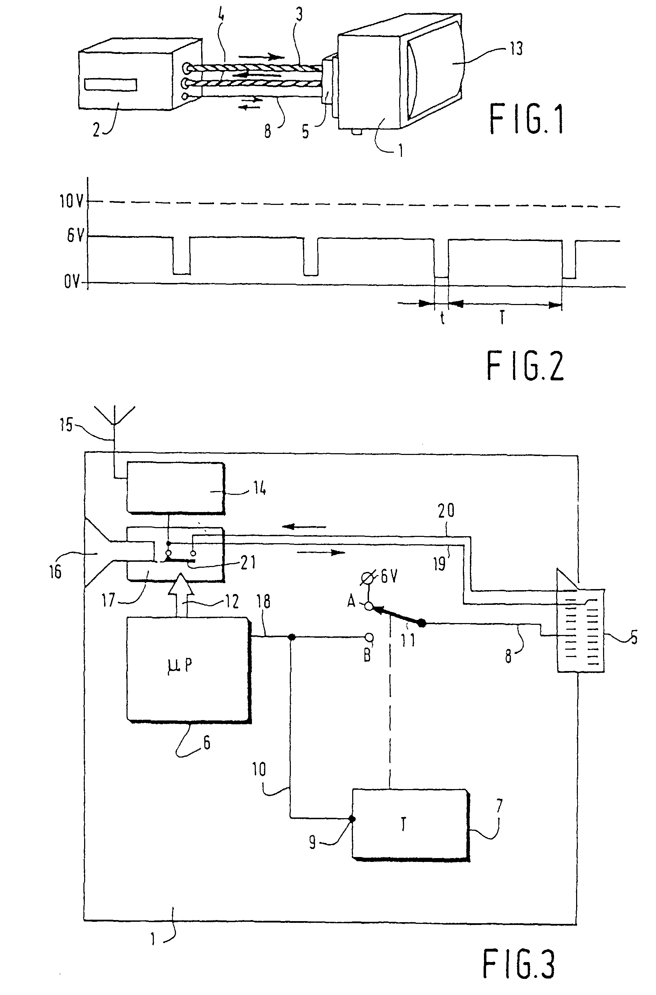

Le dispositif qui est représenté sur la figure 1 comprend un téléviseur 1 avec un écran 13 pour représenter des images. Il est muni à l'arrière d'un connecteur 5 de liaison avec un appareil périphérique 2, au moyen de conducteurs 3, 4, 8. Ce connecteur est de préférence une prise SCART, dont les dimensions et les fonctionnalités des broches sont normalisées.

Dans le dispositif représenté par la figure 3, qui est un téléviseur, des signaux sont captés par exemple par une antenne 15 et transformés dans un démodulateur 14 en des signaux qui sont transmis à des moyens de présentation d'images 17 et qui sont directement exploitables par ces derniers. A l'entrée d'antenne peuvent aussi être amenés des signaux haute-fréquence venant de tout autre type de source, par exemple un "décodeur-satellite" ou un système de télévision par câble. Ces signaux représentent des images soit d'un format 4:3, dit premier format, soit d'un format 16:9, dit second format, les moyens de présentation d'images étant capables de présenter des images des deux formats. Les images sont affichées sur un tube-image 16, dont l'écran est visible en 13 sur la figure 1. Les signaux issus du démodulateur et directement exploitables par les moyens de présentation d'images sont transmis aussi à une broche de la prise SCART 5 (qui est sur la figure 3 représentée de face avec ses broches de connexion) par un conducteur 19. Des signaux issus d'un magnétoscope ou de toute autre source d'images (non représenté sur la figure 3) extérieure au téléviseur et qui sont directement exploitables par les moyens de présentation d'images 17 sont amenés via une autre broche de la prise SCART 5 par un conducteur 20. La broche numéro huit de la prise SCART 5 est reliée à un conducteur 8. Les conducteurs reliés à la prise portent sur la figure le numéro de la broche de la prise à laquelle ils sont reliés.

Lorsqu'il délivre sur la prise 5 des signaux représentant des images au format 4:3, à l'intention des moyens de présentation d'images 17, l'appareil périphérique applique sur la broche numéro huit de cette même prise une tension déterminée qui est destinée à informer les moyens de présentation d'images d'une part que des signaux vidéo sont fournis par l'appareil périphérique, et d'autre part au sujet du format de ces signaux. Selon la normalisation actuelle, cette tension est comprise entre 9,5 à 12 volts dans le cas d'images au format 4:3, et selon la future norme elle sera en outre comprise entre 4,5 à 7 volts dans le cas d'images au format 16:9.

Selon l'invention le conducteur 8 est amené à un commutateur 11 qui relie ce conducteur 8 soit à une borne A soit à une borne B. Il est clair que le commutateur 11 est un commutateur électronique et non pas mécanique, qu'il ne comporte pas de pièce mobile et que donc, lorsqu'on mentionne sa position, il s'agit d'une convention de représentation sur un dessin.

Ce commutateur est actionné par un circuit 7, qui commande le positionnement du commutateur pendant la majeure partie du temps en position A, et pendant un bref instant à intervalles réguliers en position B, et ceci seulement dans le cas où des images de format 16:9 sont reçues par le démodulateur 14.

La borne A est reliée à une source de tension 6V de six volts. La borne B est reliée à un moyen 6 de commande des fonctions du téléviseur, qui comporte habituellement un microprocesseur. Ce moyen est notamment chargé de commander un commutateur 21 situé à l'intérieur des moyens 17 et qui, de façon connue, sélectionne des signaux en provenance soit du démodulateur 14, soit de la prise SCART 5 via le conducteur 20. Le moyen de commande 6 envoie aussi une commande aux moyens de présentation d'images 17 pour sélectionner le format d'affichage de ces derniers (soit le format 4:3 soit le format 16:9). On peut aussi imaginer que les moyens de présentation d'images 17 soient directement reliés à la broche numéro huit de la prise 5 pour connaître le format des images.

Le circuit 7 comporte une base de temps qui détermine des intervalles de temps représentés par "t" et "T" sur la figure 2. A cet effet il est bien entendu relié aux moyens de présentation d'images 17 pour en recevoir une synchronisation (par exemple au moyen de l'information connue dite "sandcastle", non représentée, qui dessert en général la plupart des circuits d'un téléviseur). La durée t+T est de préférence celle d'une trame de télévision avec entrelacement (20 millisecondes). La durée t est de préférence inférieure à celle du temps dit de retour de trame, par exemple elle est de l'ordre de 0,25 milliseconde. La base de temps 7 actionne le commutateur 11 en le plaçant durant le temps T dans la position A reliée à la source 6V de basse impédance, et durant le temps t dans la position B reliée à une entrée du moyen de commande 6, laquelle présente une impédance de valeur moyenne. Ainsi est engendré le signal qui est appliqué à la broche huit de la prise 5 en l'absence de tension appliquée par un appareil périphérique sur cette même broche, et qui est représenté en traits pleins sur la figure 2 : pendant le temps T, la tension est celle de la source de 6V, et pendant le temps t, le conducteur 8 est mis à la masse par sa liaison avec l'entrée du moyen 6, entrée qui est par exemple reliée à la masse par une résistance de valeur moyenne. La source 6V a une impédance interne qui est celle définie par la future norme. Ainsi le téléviseur applique-t-il une tension de six volts sur la broche de la prise pendant la plus grande partie du temps, lorsque le démodulateur 14 reçoit des images au format 16:9. Lorsque ce n'est pas le cas, des moyens sont prévus pour qu'une commande mette le commutateur en position B.

Lorsqu'ils sont en position de lecture d'une image au format 4:3, les magnétoscopes actuels appliquent une tension supérieure à 9,5 volts à la broche numéro huit de la prise SCART. Si cette tension est appliquée sous une impédance interne de l'ordre de par exemple 10000 Ω, elle est modifiée de façon importante par sa connexion avec la source de tension de 6V pendant les intervalles de temps T, mais elle pourra être lue pendant les intervalles de temps t. Avec des images au format 16:9 au lieu d'images au format 4:3, le magnétoscope fournira en position de lecture une tension de six volts sur la broche numéro huit de la prise, c'est-à-dire que le téléviseur comme le magnétoscope fournissent la même tension sur la broche de la prise lorsque des images au format 16:9 sont présentes. Par contre dans le cas d'images au format 4:3, le magnétoscope fournit une tension supérieure à 9,5 volts , alors que dans le même cas le téléviseur ne fournit aucune tension.

Le circuit 7 possède une entrée 9 de commande de blocage de la base de temps qui est reliée par un conducteur 10 à la connexion 18 reliant le commutateur 11 au moyen 6 de commande des fonctions du dispositif. La fonction de cette entrée 9 est de mettre la base de temps, lorsqu'une tension supérieure à quelques volts est détectée sur l'entrée 9, dans l'état qui place le commutateur dans la position B, reliant la broche huit de la prise avec le moyen 6 de commande des fonctions du dispositif. Ceci ne peut pas arriver quand la connexion 18 est isolée, c'est-à-dire pendant les intervalles de temps T où le commutateur est en position A. Cela ne peut se produire donc que lorsqu'un appareil périphérique applique une tension sur la broche huit de la prise 5 pendant que le commutateur est en position B. Alors le commutateur restera en position B tant que la tension restera appliquée par l'appareil périphérique, ce qui assure ainsi que la tension en question est amenée à l'entrée du moyen 6 pour l'informer du format d'image fourni par l'appareil périphérique.

Le moyen de commande des fonctions du dispositif comportant un microprocesseur, il est également possible dans une variante de réalisation non représentée, que la fonction de base de temps soit assurée par ce même microprocesseur, lequel commande alors directement le commutateur 11. La programmation d'un microprocesseur pour faire fonction de base de temps est connue en soi. Il faut alors programmer le microprocesseur pour qu'il délivre au commutateur le signal qui le place en position B, lorsque la tension sur la connexion 18 est supérieure au seuil mentionné plus haut.

On peut donc récapituler les quatre situations possibles ainsi:
A) le téléviseur reçoit une image de format 4:3 par son entrée d'antenne, le magnétoscope l'enregistre ou pas, mais de toute façon il ne fournit pas de signaux : le commutateur 11 est en B en permanence ou bien la source 6V est déconnectée, et la broche huit de la prise est en l'air ou à zéro volt en permanence.
B) le téléviseur reçoit une image de format 16:9 par son entrée d'antenne, le magnétoscope l'enregistre ou pas, mais de toute façon il ne fournit pas de signaux : le commutateur 11 est basculé périodiquement entre A et B, et la broche huit de la prise est portée à six volts du fait du téléviseur, pendant les périodes de temps T.
C) le téléviseur reçoit une image de format 4:3 de la part du magnétoscope, quels que soient les signaux reçus par son antenne : le commutateur 11 est en B en permanence et la broche huit de la prise est portée à dix volts en permanence du fait que le magnétoscope est en fonction de lecture en format 4:3.
D) le téléviseur reçoit une image de format 16:9 de la part du magnétoscope, quels que soient les signaux reçus par son antenne : le commutateur 11 est en B en permanence et la broche huit de la prise est portée à six volts en permanence du fait que le magnétoscope est en fonction de lecture en format 16:9.

## Revendications

1. Dispositif comprenant un démodulateur vidéo et des moyens de présentation d'images, le démodulateur étant susceptible de fournir des signaux représentant des images soit d'un premier format, soit d'un second format, et les moyens de présentation d'images étant capables de présenter des images des deux formats, dispositif susceptible d'être relié à un appareil périphérique d'enregistrement et de reproduction d'images capable d'exploiter et de fournir des signaux représentant des images de chacun des deux formats, la liaison entre le dispositif et l'appareil périphérique se faisant via un connecteur multibroches sur une broche duquel l'appareil périphérique applique, lorsqu'il délivre des signaux au dispositif, une tension déterminée destinée à informer les moyens de présentation d'images que des signaux vidéo sont fournis par l'appareil périphérique, le dispositif étant également muni de moyens pour appliquer sur la même broche une tension indiquant à quel format d'image correspondent les signaux qui sont fournis par le démodulateur, caractérisé en ce que le dispositif applique la dite tension seulement dans le cas où le démodulateur fournit des signaux représentant des images du second format, et en ce qu'il cesse en outre pendant un temps déterminé, à intervalles réguliers, de fournir la dite tension, afin de recevoir la tension fournie sur la broche par l'appareil périphérique.

2. Dispositif selon la revendication 1, caractérisé en ce que le temps pendant lequel il cesse d'appliquer la dite tension est plus court que le temps pendant lequel il applique la dite tension, dans un rapport d'au moins dix.

3. Dispositif selon la revendication 2, caractérisé en ce que la cessation de l'application de la dite tension a lieu pendant un intervalle de temps entre deux images ou, dans le cas d'une image entrelacée, entre deux demi-images.

4. Dispositif selon l'une quelconque des revendications précédentes, caractérisé en ce qu'il est muni de moyens pour supprimer l'application ultérieure d'une tension sur la broche dans le cas où, pendant le temps où il cesse de fournir une tension sur la broche, une tension en provenance d'un appareil périphérique y est présente.

5. Dispositif selon l'une quelconque des revendications précédentes, caractérisé en ce que des moyens pour appliquer la dite tension pendant un temps déterminé comprennent un commutateur qui relie la broche, soit à une source de tension qui fournit la dite tension, soit à un moyen de commande des fonctions du dispositif.

6. Dispositif selon la revendication précédente, caractérisé en ce que le dit commutateur est actionné par une base de temps qui, lorsqu'une tension est détectée sur la broche pendant le temps où cette broche est reliée au dit moyen de commande des fonctions du dispositif, reste bloquée dans l'état qui place le commutateur dans la position reliant la broche à un moyen de commande des fonctions du dispositif.

7. Dispositif selon la revendication précédente, caractérisé en ce qu'à cet effet une entrée de commande de blocage de la base de temps est prévue et est reliée à une connexion reliant le commutateur au dit moyen de commande des fonctions du dispositif.

8. Dispositif selon la revendication 6, caractérisé en ce que le moyen de commande des fonctions du dispositif comporte un microprocesseur, et en ce que la fonction de base de temps est réalisée par ce même microprocesseur.

## Patentansprüche

1. Anordnung mit einem Videodemodulator und Bildwiedergabemitteln, wobei der Demodulator in der Lage ist, Signale zu liefern, die entweder Bildern eines ersten Formats oder Bildern eines zweiten Formats entsprechen, die Bildwiedergabemittel in der Lage sind, Bilder mit diesen beiden Formaten wiederzugeben, und die Anordnung mit einem Peripheriegerät zur Aufzeichnung und Wiedergabe von Bildern verbunden werden kann, das in der Lage ist, Signale zu liefern, die Bildern jedes dieser beiden Formate entsprechen, und wobei die Verbindung zwischen dieser Anordnung und dem Peripheriegerät über einen mehradrigen Anschluß auf einer Ader erfolgt, an die das Peripheriegerät bei Abgabe von Signalen an die Anordnung eine bestimmte Spannung anlegt, die dazu bestimmt ist, den Bildwiedergabemitteln mitzuteilen, daß Videosignale vom Peripheriegerät übermittelt werden, und wobei die Anordnung auch mit Mitteln versehen ist, um an dieselbe Ader eine Spannung anzulegen, die anzeigt, welchem Bildformat die von dem Demodulator übermittelten Signale entsprechen, dadurch gekennzeichnet, daß die Anordnung die genannte Spannung nur dann anlegt, wenn der Demodulator Signale übermittelt, die Bildern des zweiten Formats entsprechen, und dadurch, daß sie außerdem für eine bestimmte Zeit in regelmäßigen Intervallen aufhört, die genannte Spannung zu liefern, um die Spannung zu empfangen, die auf der Ader von dem Peripheriegerät angelegt wird.

2. Anordnung nach Anspruch 1, dadurch gekennzeichnet, daß die Zeit, während der die Anordnung aufhört, die genannte Spannung anzulegen, kürzer ist als die Zeit, während der die genannte Spannung angelegt wird, und zwar in einem Verhältnis von mindestens zehn.

3. Anordnung nach Anspruch 2, dadurch gekennzeichnet, daß die Unterbrechung des Anlegens der genannten Spannung während eines Zeitintervalls zwischen zwei Bildern oder bei Zeilensprungbildern zwischen zwei Halbbildern stattfindet.

4. Anordnung nach einem der vorgenannten Ansprüche, dadurch gekennzeichnet, daß sie mit Mitteln zur Unterdrückung eines späteren Anlegens einer Spannung an die Ader versehen ist, falls während der Zeit, in der sie aufhört, eine Spannung an die Ader anzulegen, dort eine aus einem Peripheriegerät kommende Spannung vorhanden ist.

5. Anordnung nach einem der vorgenannten Ansprüche, dadurch gekennzeichnet, daß Mittel zum Anlegen der genannten Spannung für eine bestimmte Zeit einen Schalter umfassen, der die Ader entweder mit einer die genannte Spannung liefernden Spannungsquelle oder mit Mitteln zur Funktionssteuerung der Anordnung verbindet.

6. Anordnung nach einem der vorgenannten Ansprüche, dadurch gekennzeichnet, daß der genannte Schalter über eine Zeitbasis aktiviert wird, die, wenn auf der Ader eine Spannung während der Zeit, in der diese Ader mit den genannten Mitteln zur Funktionssteuerung der Anordnung verbunden ist, in dem Status blockiert bleibt, der den Schalter in die Position versetzt, die die Ader mit Mitteln zur Funktionssteuerung der Anordnung verbindet.

7. Anordnung nach einem der vorgenannten Ansprüche, dadurch gekennzeichnet, daß dazu ein Eingang für einen Befehl zur Blockierung der Zeitbasis eingerichtet ist und mit einem Anschluß verbunden ist, der den Schalter mit den genannten Mitteln zur Funktionssteuerung der Anordnung verbindet.

8. Anordnung nach Anspruch 6, dadurch gekennzeichnet, daß die Mittel zur Funktionssteuerung der Anordnung einen Mikroprozessor umfassen, und die Zeitbasisfunktion durch denselben Mikroprozessor realisiert wird.

## Claims

1. An arrangement comprising a video demodulator and picture display means, the demodulator being capable of supplying signals representing pictures of either a first format or a second format, and the picture display means being capable of reproducing pictures of both formats, which arrangement can be connected to a peripheral picture recording and reproducing apparatus capable of processing and supplying signals representing pictures of each of the two formats, the connection between the arrangement and the peripheral apparatus being made via a multi-pin connector having one pin to which the peripheral apparatus, when it supplies signals to the arrangement, applies a given voltage intended to inform the picture display means that video signals are supplied by the peripheral apparatus, the arrangement also comprising means for applying to the same pin a voltage indicating the picture format to which the signals supplied by the demodulator correspond, characterized in that the arrangement applies said voltage only in the case that the demodulator supplies signals representing pictures of the second format and, in addition, ceases to supply said voltage for a given time, at regular intervals, in order to receive the voltage supplied to the pin by the peripheral apparatus.

2. An arrangement as claimed in Claim 1, characterized in that the time during which it ceases to supply said voltage is a factor of at least ten shorter than the time during which it applies said voltage.

3. An arrangement as claimed in Claim 2, characterized in that said voltage ceases to be applied during a time interval between two pictures or, in the case of an interlaced picture, between two fields.

4. An arrangement as claimed in any one of the preceding Claims, characterized in that it comprises means for inhibiting the subsequent application of a voltage to the pin in the case that, during the time in which it ceases to supply a voltage to the pin, a voltage from a peripheral apparatus is present on said pin.

5. An arrangement as claimed in any one of the preceding Claims, characterized in that means for applying said voltage for a given time comprise a switch which connects the pin either to a voltage source supplying said voltage or to a means for controlling functions of the arrangement.

6. An arrangement as claimed in the preceding Claim, characterized in that said switch is activated by a time base which, when a voltage is detected on the pin during the time in which said pin is connected to the means for controlling functions of the arrangement, remains blocked in the state in which the switch is set to the position in which the pin is connected to a means for controlling functions of the arrangement.

7. An arrangement as claimed in the preceding Claim, characterized in that for this purpose there has been provided a control input for blocking the time base, which input is connected to a connection by which the switch is connected to said means for controlling functions of the arrangement.

8. An arrangement as claimed in Claim 6, characterized in that the means for controlling functions of the arrangement comprises a microprocessor, and the time base function is realized by the same microprocessor.
